# EUROPEAN PATENT APPLICATION

(11) **EP 4 729 150 A1**
(43) Date of publication of application: **22.04.2026**
(21) Application number: 24903956.1
(22) Date of filing: 28.10.2024
(51) Int. Cl.: B01D 35/30, D06F 39/10, B01D 35/02

(54) **FILTER MODULE, FILTER APPARATUS, AND CLOTHES TREATING APPARATUS**

(30) Priority: 11.12.2023 KR 20230179132
(71) Applicant: Samsung Electronics Co., Ltd., Suwon-si, Gyeonggi-do 16677 (KR)
(72) Inventor: LEE, Jaebok, Suwon-si Gyeonggi-do 16677 (KR); CHO, Youngjin, Suwon-si Gyeonggi-do 16677 (KR); SEO, Dongpil, Suwon-si Gyeonggi-do 16677 (KR); SUNG, Taehyun, Suwon-si Gyeonggi-do 16677 (KR); LEE, Kanghyun, Suwon-si Gyeonggi-do 16677 (KR)
(74) Representative: Appleyard Lees IP LLP
(86) International application number: PCT/KR2024/016534
(87) International publication number: WO 2025/127389

(57) **Abstract**

A filter module may comprise a filter case having a case opening and an inlet to allow water to enter the filter case, a filter mountable in the filter case through the case opening, and a sealing member that is deformable and is configured so that, with the filter mounted in the filter case, at least a portion of the sealing member is outside a perimeter of the case opening, and with the filter mounted in the filter case and the water entering the filter case through the inlet and thereby causing a hydraulic pressure in the filter case, the sealing member is deformed by the hydraulic pressure so as to seal a gap formed between the filter case and the filter.

## Description

### [Technical Field]

The disclosure relates to a filter module, a filter apparatus including the filter module, and a clothes treating apparatus including the filter module.

### [Background Art]

In general, washing machines are devices that use the driving force of a drive motor to agitate together laundry, water, and detergent placed in a tub, thereby allowing the laundry to be washed by mutual friction.

The processes performed by a washing machine, regardless of the type of washing machine, may include a washing process in which detergent and water are supplied to a tub containing laundry and a drum is rotated to wash the laundry, a rinsing process in which water is supplied to the tub and the drum is rotated to rinse the laundry, and a spin-drying process in which water is drained from the tub and the drum is rotated to remove moisture from the laundry.

The washing machine may also include a drainage device configured to drain water from the tub to the outside of the washing machine when performing the washing process, the rinsing process, and/or the spin-drying process. The drainage device may be configured so that water from the tub may flow back into the tub when performing the washing process and/or the rinsing process.

The drainage device may include a filter for filtering foreign matter from the water discharged from the tub. The filter may be provided on the outside of the washing machine.

### [Disclosure]

### [Technical Problem]

An aspect of the present disclosure provides a filter module, a filter apparatus, and a clothes treating apparatus with improved sealing performance.

Further, an aspect of the present disclosure provides a filter module, a filter apparatus, and a clothes treating apparatus having an improved filter mounting structure.

Technical tasks to be achieved in this document are not limited to the technical tasks mentioned above, and other technical tasks not mentioned will be clearly understood by those skilled in the art from the description below.

### [Technical Solution]

According to an embodiment of the disclosure, a filter module may include a filter case having a case opening and an inlet to allow water to enter the filter case, a filter mountable in the filter case through the case opening, and a sealing member that may be deformable and configured so that, with the filter mounted in the filter case, at least a portion of the sealing member may be outside a perimeter of the case opening, and with the filter mounted in the filter case and the water entering the filter case through the inlet and thereby causing a hydraulic pressure in the filter case, the sealing member may be deformed by the hydraulic pressure so as to seal a gap formed between the filter case and the filter.

According to an embodiment of the disclosure, a filter apparatus may include a filter housing that may include a housing inlet and a housing outlet, and a filter module that may be configured to filter foreign matter from water entering through the housing inlet, the filter module may include a filter case having a case opening and an inlet that may allow the water entering from the housing inlet to enter the filter case, a filter that may be mountable in the filter case through the case opening, and a sealing member that is configured so that, with the filter mounted in the filter case, at least a portion of the sealing member may be outside a perimeter of the case opening so as to seal a gap formed between the filter case and the filter.

According to an embodiment of the disclosure, a clothes treating apparatus may include a housing, a tub disposed within the housing, and a drainage device that may discharge water from the tub and may include a filter module configured to filter foreign matter from the discharged water, the filter module may include a filter case including a case opening and an inlet that may allow the discharged water to enter the filter case, a filter mountable in the filter case through the case opening, and a sealing member that may be configured so that, with the filter mounted in the filter case, at least a portion of the sealing member may be outside a perimeter of the case opening so as to seal a gap formed between the filter case and the filter.

### [Description of Drawings]

FIG. 1 is a view illustrating a clothes treating apparatus according to an embodiment of the present disclosure.
FIG. 2 is a cross-sectional view illustrating a washing machine of the clothes treating apparatus according to an embodiment of the present disclosure.
FIG. 3 is a control block diagram of the washing machine of the clothes treating apparatus according to an embodiment of the present disclosure.
FIG. 4 is a view illustrating some configurations of a drainage device according to an embodiment of the present disclosure.
FIG. 5 is an exploded view of some configuration of the drainage device according to an embodiment of the present disclosure.
FIG. 6 is a view illustrating a sealing member according to an embodiment of the present disclosure.
FIG. 7 is a cross-sectional view taken along the line A-A' shown in FIG. 4.
FIG. 8 is an enlarged view of portion B shown in FIG. 7.
FIG. 9 is a view illustrating a state in which the sealing member is deformed by hydraulic pressure inside a filter module according to an embodiment of the present disclosure.
FIG. 10 is a view illustrating a state in which a filter of the filter module according to an embodiment of the present disclosure is rotated to be separated from a filter case.
FIG. 11 is an enlarged cross-sectional view illustrating a portion of a filter module according to an embodiment of the present disclosure.
FIG. 12 is an enlarged cross-sectional view illustrating a portion of a filter module according to an embodiment of the present disclosure.
FIG. 13 is an enlarged cross-sectional view illustrating a portion of a filter module according to an embodiment of the present disclosure.
FIG. 14 is a view illustrating a clothes treating apparatus according to an embodiment of the present disclosure.
FIG. 15 is a view illustrating an inside of a filter apparatus according to an embodiment of the present disclosure.
FIG. 16 is an exploded view illustrating the filter apparatus according to an embodiment of the present disclosure.
FIG. 17 is an exploded view illustrating the filter apparatus according to an embodiment of the present disclosure at a different angle from FIG. 16.
FIG. 18 is a control block diagram illustrating the filter apparatus according to an embodiment of the present disclosure.
FIG. 19 is a cross-sectional view illustrating some configurations of the filter apparatus according to an embodiment of the present disclosure.
FIG. 20 is an enlarged view of portion C shown in FIG. 19.
FIG. 21 is a view illustrating a filter of a filter module according to an embodiment of the present disclosure in a state in which the filter is rotated to be separated from a filter case.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

A washing machine according to various embodiments may perform washing, rinsing, spin-drying, and drying processes. The washing machine is an example of a clothes treating apparatus, and the clothes treating apparatus is a concept including a device capable of washing clothes (objects to be washed, and objects to be dried), a device capable of drying clothes, and a device capable of washing and drying clothes.

The washing machine according to various embodiments may include a top-loading washing machine in which a laundry inlet for inserting or removing laundry is provided to face upward, or a front-loading washing machine in which a laundry inlet is provided to face forward. The washing machine according to various embodiments may include a washing machine of a loading type other than the top-loading washing machine and the front-loading washing machine.

For the top-loading washing machine, laundry may be washed using water current generated by a rotating body such as a pulsator. For the front-loading washing machine, laundry may be washed by repeatedly lifting and lowering laundry by rotating a drum. The front-loading washing machine may include a dryer combined washing machine capable of drying laundry stored in a drum. The dryer combined washing machine may include a hot air supply device for supplying high-temperature air into the drum and a condensing device for removing moisture from air discharged from the drum. For example, the dryer combined washing machine may include a heat pump device. The washing machine according to various embodiments may include a washing machine using a washing method other than the above-described washing method.

The washing machine according to various embodiments may include a housing accommodating various components therein. The housing may be provided in the form of a box including a laundry inlet on one side thereof.

The washing machine may include a door for opening and closing the laundry inlet. The door may be rotatably mounted to the housing by a hinge. At least a portion of the door may be transparent or translucent to allow the inside of the housing to be visible.

The washing machine may include a tub disposed within the housing to store water. The tub may be formed in a substantially cylindrical shape with a tub opening formed on one side thereof. The tub may be disposed inside the housing in such a way that the tub opening corresponds to the laundry inlet.

The tub may be connected to the housing by a damper. The damper may absorb vibration generated when the drum rotates, and the damper may reduce vibration transmitted to the housing.

The washing machine may include a drum provided to accommodate laundry.

The drum may be disposed inside the tub such that a drum opening provided on one side of the drum corresponds to the laundry inlet and the tub opening. Laundry may pass sequentially through the laundry inlet, the tub opening, and the drum opening and then be received in the drum or removed from the drum.

The drum may perform each operation according to washing, rinsing, and/or spin-drying while rotating in the tub. A plurality of through holes may be formed in a cylindrical wall of the drum to allow water stored in the tub to be introduced into or to be discharged from the drum.

The washing machine may include a driving device configured to rotate the drum. The driving device may include a drive motor and a rotating shaft for transmitting a driving force generated by the drive motor to the drum. The rotating shaft may penetrate the tub to be connected to the drum.

The driving device may perform respective operations according to washing, rinsing, and/or spin-drying, or drying processes by rotating the drum in a forward or reverse direction.

The washing machine may include a water supply device configured to supply water to the tub. The water supply device may include a water supply pipe and a water supply valve disposed in the water supply pipe. The water supply pipe may be connected to an external water supply source. The water supply pipe may extend from an external water supply source to a detergent supply device and/or the tub. Water may be supplied to the tub through the detergent supply device. Alternatively, water may be supplied to the tub without passing through the detergent supply device.

The water supply valve may open or close the water supply pipe in response to an electrical signal from a controller. The water supply valve may allow or block the supply of water to the tub from an external water supply source. The water supply valve may include a solenoid valve configured to open or close in response to an electrical signal.

The washing machine may include the detergent supply device configured to supply detergent to the tub. The detergent supply device may include a manual detergent supply device that requires a user to enter detergent to be used for each washing, and an automatic detergent supply device that stores a large amount of detergent and automatically adds a predetermined amount of detergent during washing. The detergent supply device may include a detergent container for storing detergent. The detergent supply device may be configured to supply detergent into the tub during a water supply process. Water supplied through the water supply pipe may be mixed with detergent via the detergent supply device. Water mixed with detergent may be supplied into the tub. Detergent is used as a term including detergent for pre-washing, detergent for main washing, fabric softener, bleach, etc., and the detergent container may be partitioned into a storage region for the pre-washing detergent, a storage region for the main washing detergent, a storage region for the fabric softener, and a storage region for the bleach.

The washing machine may include a drainage device configured to discharge water contained in the tub to the outside. The drainage device may include a drain pipe extending from a bottom of the tub to the outside of the housing, a drain valve disposed on the drain pipe to open or close the drain pipe, and a pump disposed on the drain pipe. The pump may pump water from the drain pipe to the outside of the housing.

The washing machine may include a control panel disposed on one side of the housing. The control panel may provide a user interface for interaction between a user and the washing machine. The user interface may include at least one input interface and at least one output interface.

The at least one input interface may convert sensory information received from a user into an electrical signal.

The at least one input interface may include a power button, an operation button, a course selection dial (or a course selection button), and a washing/rinsing/spin-drying setting button. The at least one input interface may include a tact switch, a push switch, a slide switch, a toggle switch, a micro switch, a touch switch, a touch pad, a touch screen, a jog dial, and/or a microphone.

The at least one output interface may visually or audibly transmit information related to the operation of the washing machine to a user.

For example, the at least one output interface may transmit information related to a washing course, operation time of the washing machine, and washing/rinsing/spin-drying settings to the user. Information about the operation of the washing machine may be output via a screen, an indicator, or a voice. The at least one output interface may include a liquid crystal display (LCD) panel, a light emitting diode (LED) panel, or a speaker.

The washing machine may include a communication module for wired and/or wireless communication with an external device.

The communication module may include at least one of a short-range wireless communication module and a long-range wireless communication module.

The communication module may transmit data to an external device (e.g., a server, a user device, and/or a home appliance) or receive data from the external device. For example, the communication module may establish communication with a server and/or a user device and/or a home appliance, and transmit and receive various types of data.

For the communication, the communication module may establish a direct (e.g., wired) communication channel or a wireless communication channel between the external devices, and support the performance of the communication through the established communication channel. According to an embodiment, the communication module may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or wide area network WAN)). These various types of communication modules may be integrated as a single component (e.g., a single chip) or implemented as a plurality of separate components (e.g., multiple chips).

The short-range wireless communication module may include a Bluetooth communication module, a Bluetooth Low Energy (BLE) communication module, a near field communication module, a WLAN (Wi-Fi) communication module, and a Zigbee communication module, an IrDA communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry transmits and receives radio signals with at least one of a base station, an external terminal, and a server in a mobile communication network.

According to an embodiment, the communication module may communicate with an external device such as a server, a user device and other home appliances through an access point (AP). The AP may connect a LAN, to which a washing machine or a user device is connected, to a WAN to which a server is connected. The washing machine or the user device may be connected to the server via the WAN. The controller may control various components of the washing machine (e.g., the drive motor, and the water supply valve). The controller may control various components of the washing machine to perform at least one operation including water supply, washing, rinsing, and/or spin-drying according to a user input. For example, the controller may control the drive motor to adjust the rotational speed of the drum or control the water supply valve of the water supply device to supply water to the tub.

The controller may include hardware such as a CPU or memory, and software such as a control program. For example, the controller may include at least one memory for storing an algorithm and program-type data for controlling the operation of components in the washing machine, and at least one processor configured to perform the above-mentioned operation by using the data stored in the at least one memory. The memory and the processor may each be implemented as separate chips. The processor may include one or more processor chips or may include one or more processing cores. The memory may include one or more memory chips or one or more memory blocks. Alternatively, the memory and the processor may be implemented as a single chip.

Hereinafter, a clothes treating apparatus according to various embodiments of the present disclosure will be described in detail with reference to the accompanying drawings.

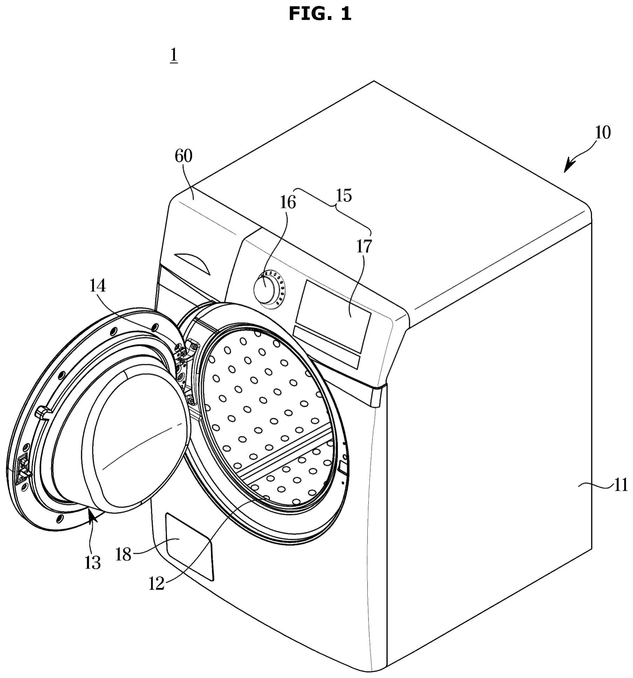

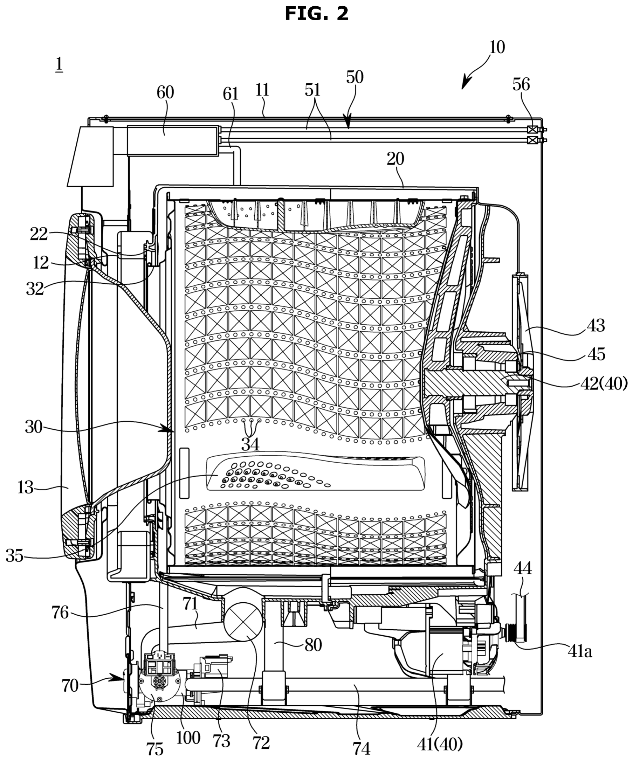

FIG. 1 is a view illustrating a clothes treating apparatus according to an embodiment of the present disclosure. FIG. 2 is a cross-sectional view illustrating a washing machine of the clothes treating apparatus according to an embodiment of the present disclosure.

As shown in FIG. 1 and FIG. 2, a clothes treating apparatus may include a washing machine 10.

The washing machine 10 may include a washing machine housing 11 accommodating various components therein. The washing machine housing 11 may form the exterior of the washing machine 10. The washing machine housing 11 may have a box shape with a portion open.

The washing machine housing 11 may include a housing opening 12 formed to provide access to the interior of a drum 30. The housing opening 12 may open substantially forwardly.

The washing machine 10 may include a door 13 for opening or closing the housing opening 12 arranged in the washing machine housing 11. The door 13 may be rotatably mounted in the washing machine housing 11 by a hinge 14. At least a portion of the door 13 may be transparent or translucent to allow the inside of the washing machine housing 11 to be visible.

The washing machine 10 may include a tub 20 disposed within the washing machine housing 11 to store water. The tub 20 may be placed inside the washing machine housing 11. The tub 20 may include a tub opening 22 arranged to correspond to the housing opening 12. The tub opening 22 may be open substantially to a front side. The tub 20 may be supported within the washing machine housing 11. The tub 20 may have a substantially cylindrical shape with one side open.

The tub 20 may be resiliently supported from the washing machine housing 11 by a damper 80. The damper 80 may be connected to the washing machine housing 11 and the tub 20. The damper 80 may absorb vibration energy between the tub 20 and the washing machine housing 11 when the vibration generated by rotation of the drum 30 is transmitted to the tub 20 and/or the washing machine housing 11, thereby damping the vibration.

The washing machine 10 may include the drum 30 provided to accommodate laundry. The drum 30 may be rotatably provided inside the tub 20. The drum 30 may perform washing, rinsing, and/or spin-drying while rotating inside the tub 20. The drum 30 may include a plurality of through holes 34 connecting an interior space of the drum 30 and an interior space of the tub 20. The drum 30 may have a substantially cylindrical shape with one side open. At least one lifter 35 may be installed on an inner circumferential surface of the drum 30 to allow the laundry to be raised and lowered when the drum 30 rotates.

The drum 30 may include a drum opening 32 provided to correspond to the housing opening 12 and the tub opening 22. Laundry may pass through the housing opening 12, the tub opening 22, and the drum opening 32, and then be introduced into the drum 30 or withdrawn from the drum 30.

The washing machine 10 may include a driving device 40 configured to rotate the drum 30. The driving device 40 may include a drive motor 41 and a rotating shaft 42 for transmitting a driving force generated by the drive motor 41 to the drum 30. The rotating shaft 42 may penetrate the tub 20 to be connected to the drum 30.

The washing machine 10 may be classified into a direct drive type in which the rotation shaft 42 is directly connected to the drive motor 41 to rotate the drum 30, and an indirect drive type in which a pulley 43 is connected between the drive motor 41 and the rotation shaft 42.

The washing machine 10 according to an embodiment may be arranged as an indirect drive type, but is not limited thereto and may be arranged as a direct drive type.

The rotating shaft 42 may be connected to the drum 30 at one end and to the pulley 43 at the other end so as to receive power from the drive motor 41. A motor pulley 41a may be formed on a rotational shaft of the drive motor 41. A drive belt 44 may be provided between the motor pulley 41a and the pulley 43, so that the rotating shaft 42 may be driven by the drive belt 44.

In a rearward portion of the tub 20, a bearing housing 45 may be installed to rotatably support the rotating shaft 42. The bearing housing 45 may be formed of an aluminum alloy and may be inserted into the rearward portion of the tub 20 when the tub 20 is injection-molded.

The driving device 40 may be provided to rotate the drum 30 in a forward or reverse direction to perform washing, rinsing, and/or spin-drying, or drying operations.

The washing machine 10 may include a water supply device 50. The water supply device 50 may supply water to the tub 20. The water supply device 50 may be located on an upper side of the tub 20. The water supply device 50 may include a water supply pipe 51 and a water supply valve 56 disposed in the water supply pipe 51. The water supply pipe 51 may be connected to an external water supply source. The water supply pipe 51 may extend from the external water supply source to a detergent supply device 60 and/or the tub 20. Water may be supplied to the tub 20 through the detergent supply device 60. Alternatively, water may be supplied to the tub 20 without passing through the detergent supply device 60.

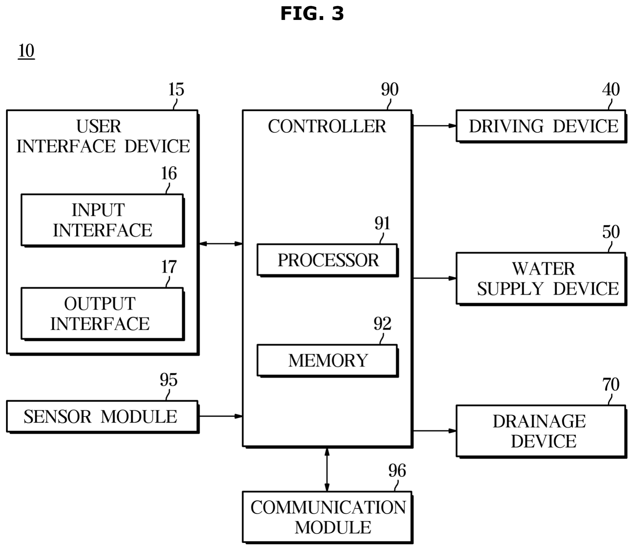

The water supply valve 56 may open or close the water supply pipe 51 in response to an electrical signal from a controller 90 (see FIG. 3). The water supply valve 56 may allow or block the supply of water from an external water supply source to the tub 20. The water supply valve 56 may include, for example, a solenoid valve configured to open or close in response to an electrical signal.

The washing machine 10 may include the detergent supply device 60 configured to supply detergent to the tub 20. The detergent supply device 60 may be configured to supply detergent into the tub 20 during a water supply process. Water supplied through the water supply pipe 51 may be mixed with detergent via the detergent supply device 60. Water mixed with detergent may be supplied to the interior of the tub 20. Detergent may include not only detergents for washing, but also rinses, deodorants, disinfectants, or air fresheners for dryer. The detergent supply device 60 may be connected to the tub 20 via a connecting pipe 61.

The washing machine 10 may include a drainage device 70. The drainage device 70 may be configured to drain water contained in the tub 20 to the outside. The drainage device 70 may include a drain pump 73 draining the water in the tub 20 to an outside of the washing machine housing 11, a connecting hose 71 connecting the tub 20 and the drain pump 73 to allow the water in the tub 20 to flow into the drain pump 73, and a drain hose 74 guiding the water pumped by the drain pump 73 to the outside of the washing machine housing 11. The drainage device 70 may include a drain valve 72 provided on the connecting hose 71 to open or close the connecting hose 71.

The drainage device 70 may include a circulation pump 75 to circulate water in the tub 20 back to the tub 20. The drainage device 70 may include a circulation hose 76 to guide water pumped by the circulation pump 75 to the tub 20. The drainage device 70 may include a filter module 100 to filter out foreign matter from the water discharged to the outside of the washing machine 10. The filter module 100 may be provided so as to be accessible from the outside of the washing machine housing 11 by operating a filter door 18 provided in the washing machine housing 11.

The washing machine 10 may provide a user interface device 15 for interaction between a user and the washing machine 10.

The washing machine 10 may include at least one user interface device 15. The user interface device 15 may include at least one input interface 16 and at least one output interface 17.

The at least one input interface 16 may convert sensory information received from a user into an electrical signal.

The at least one input interface 16 may include a power button, an operation button, a course selection dial (or a course selection button), and a washing/rinsing/spin-drying setting button. The at least one input interface 16 may include, for example, a tact switch, a push switch, a slide switch, a toggle switch, a micro switch, a touch switch, a touch pad, a touch screen, a jog dial, and/or a microphone, or the like.

The at least one output interface 17 may transmit various data related to an operation of the washing machine 10 to the user by generating sensory information.

For example, the at least one output interface 17 may transmit information related to a washing course, operation time of the washing machine 10, and washing /rinsing/spin-drying settings to the user. Information about the operation of the washing machine 10 may be output through a screen, indicator, voice, or the like. The at least one output interface 17 may include, for example, a LCD panel, a LED panel, a speaker, or the like.

FIG. 3 is a control block diagram of the washing machine of the clothes treating apparatus according to an embodiment of the present disclosure.

In an embodiment, the washing machine 10 of the clothes treating apparatus 1 may include the user interface device 15, the driving device 40, the water supply device 50, the drainage device 70, a sensor module 95, and a communication module 96, and a controller 90.

The user interface device 15 may provide a user interface for interacting with the user and the washing machine 10.

The user interface device 15 may include the at least one input interface 16 and the at least one output interface 17.

The at least one input interface 16 may convert sensory information received from the user into an electrical signal.

The at least one input interface 16 may include a power button, an operation button, a course selection dial (or a course selection button), and a washing/rinsing/spin-drying setting button. The at least one input interface 16 may include, for example, a tact switch, a push switch, a slide switch, a toggle switch, a micro switch, a touch switch, a touch pad, a touch screen, a jog dial, and/or a microphone.

The at least one output interface 17 may transmit various data related to the operation of the washing machine 10 to the user by generating sensory information.

For example, the at least one output interface 17 may transmit information related to a washing course, operation time of the washing machine 10, and washing/rinsing/spin-drying settings to the user. Information about the operation of the washing machine 10 may be output through a screen, indicator, voice, or the like. The at least one output interface 17 may include, for example, a LCD panel, a LED panel, a speaker, or the like.

The driving device 40 may include the drive motor 41 that provides the driving force to rotate the drum 30. The driving device 40 may operate based on a control signal from the controller 90.

The water supply device 50 may include the water supply valve 56 configured to open or close the water supply pipe 51 extending from an external water supply source to the detergent supply device 60 and/or the tub 20. The water supply valve 56 may be opened and closed based on a control signal from the controller 90.

The drainage device 70 may include the drain pump 73 for draining the water in the tub 20 to the outside of the washing machine housing 11. The drain pump 73 may operate based on a control signal from the controller 90.

The sensor module 95 may include at least one sensor for obtaining information related to an operational state of the washing machine 10.

For example, the sensor module 95 may include at least one of a water level sensor to detect a water level in the tub, a sensor to detect the operational state of the driving device 40, and a flow sensor to detect a flow rate into the tub 20 via the water supply device 50, or a sensor to detect the operational state of the drainage device 70.

The sensor to detect the operational state of the driving device 40 may include, for example, a current sensor to measure a drive current being applied to the drive motor 41, but is not limited thereto.

The sensor to detect the operational state of the drainage device 70 may include, for example, a current sensor to measure the drive current being applied to the drain pump 73, but is not limited thereto.

The washing machine 10 may include the communication module 96 for wired and/or wireless communication with an external device.

The communication module 96 may include at least one of a short-range communication module or a long-range communication module.

The communication module 96 may exchange data with an external device (e.g., a server, user device, and/or a home appliance). For example, the communication module 96 may establish communication with a server and/or a user device and/or a home appliance, and transmit and receive various types of data.

For the communication, the communication module 96 may establish a direct (e.g., wired) communication channel or a wireless communication channel between external devices, and support the performance of the communication through the established communication channel. According to an embodiment, the communication module 96 may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or WAN)). These various types of communication modules may be integrated as one component (e.g., a single chip) or implemented as a plurality of separate components (e.g., multiple chips).

The short-range wireless communication module may include a Bluetooth communication module, a Bluetooth Low Energy (BLE) communication module, a near field communication module, a WLAN (Wi-Fi) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry may transmit and receive radio signals with at least one of a base station, an external terminal, and a server on a mobile communication network.

In an embodiment, the communication module may communicate with an external device, such as a server, a user device and other home appliances via an access point (AP). The AP may connect a LAN, to which the washing machine 10 or a user device is connected, to a WAN to which a server is connected. The washing machine 10 or the user device may be connected to the server via a WAN. The controller 90 may control various configurations of the washing machine 10 (e.g., the driving device 40, and the water supply valve 50). The controller 90 may control various configurations of the washing machine 10 to perform at least one operation including water supply, washing, rinsing, and/or spin-drying according to a user input. For example, the controller 90 may control the drive motor 41 to adjust the rotational speed of the drum 30 or control the water supply valve 56 of the water supply device 50 to supply water to the tub 20.

The controller 90 may include hardware such as a CPU or memory, and software such as a control program. For example, the controller 90 may include at least one memory 92 for storing an algorithm and program-type data for controlling the operation of components in the washing machine 10, and at least one processor 91 configured to perform the above-mentioned operation by using the data stored in the at least one memory 92. The memory 92 and the processor 91 may each be implemented as separate chips. The processor 91 may include one or more processor chips or may include one or more processing cores. The memory 92 may include one or more memory chips or one or more memory blocks. Alternatively, the memory 92 and the processor 91 may be implemented as a single chip.

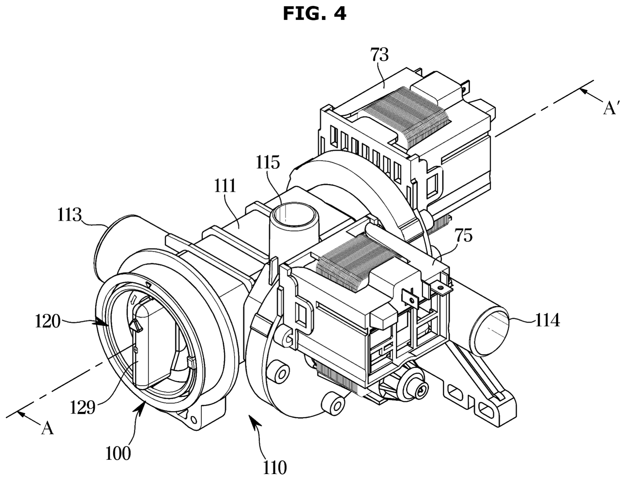

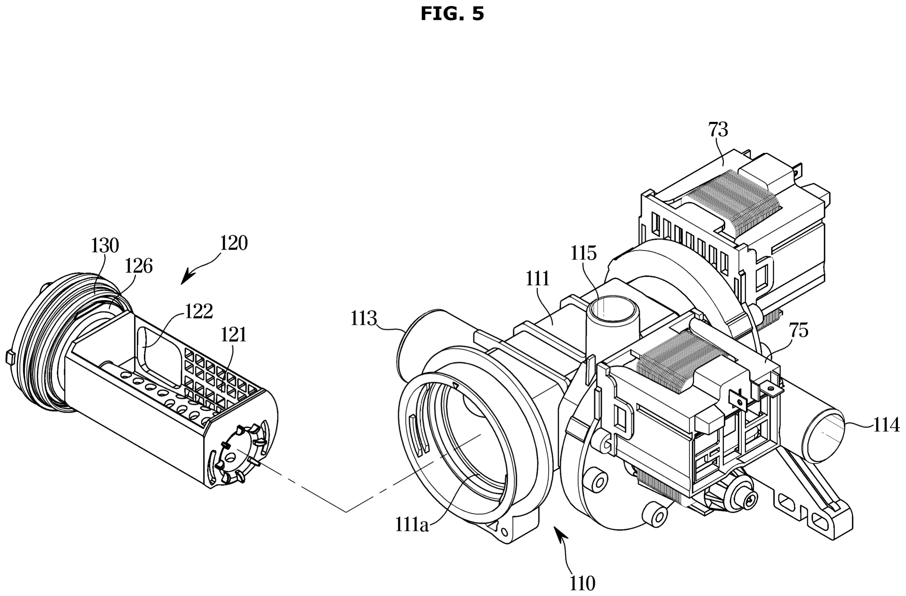

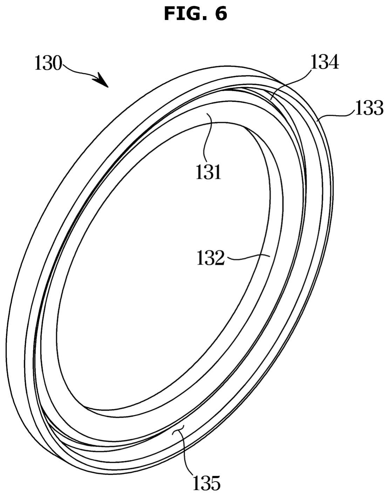

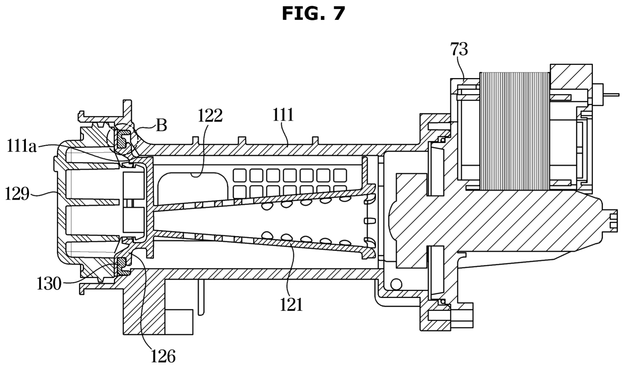

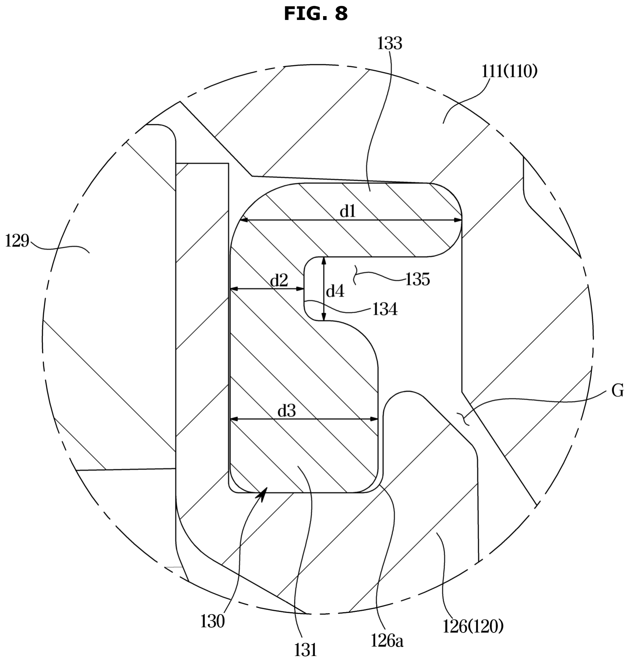

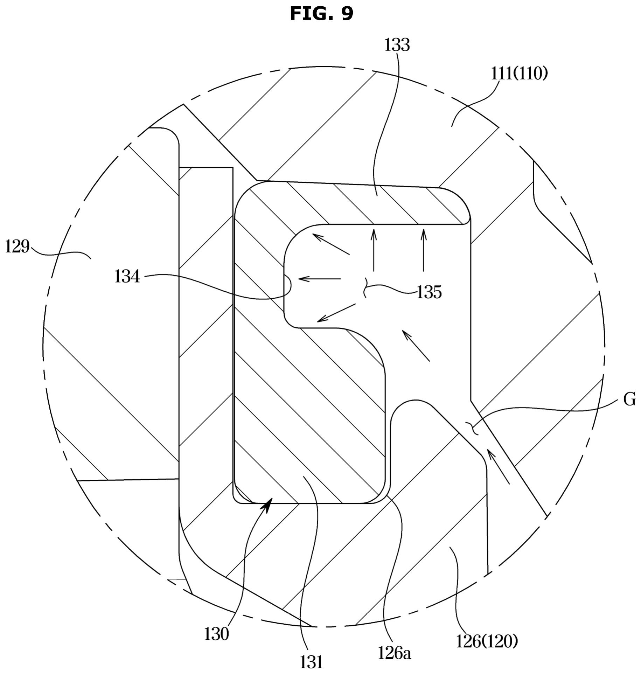

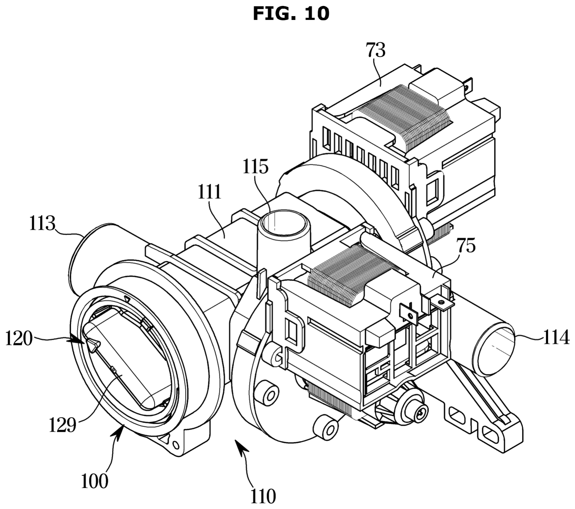

FIG. 4 is a view illustrating some configurations of a drainage device according to an embodiment of the present disclosure. FIG. 5 is an exploded view of some configuration of the drainage device according to an embodiment of the present disclosure. FIG. 6 is a view illustrating a sealing member according to an embodiment of the present disclosure. FIG. 7 is a cross-sectional view taken along the line A-A' shown in FIG. 4. FIG. 8 is an enlarged view of portion B shown in FIG. 7. FIG. 9 is a view illustrating a state in which the sealing member is deformed by hydraulic pressure inside a filter module according to an embodiment of the present disclosure. FIG. 10 is a view illustrating a state in which a filter of the filter module according to an embodiment of the present disclosure is rotated to be separated from a filter case.

Referring to FIGS. 4 to 8, the drainage device 70 according to an embodiment may include a filter module 100. The filter module 100 may be configured to filter foreign matter contained in water drained from the tub 20.

The filter module 100 may include a filter case 110 and a filter 120 receivable within the filter case 110.

The filter case 110 may include a case body 111. The case body 111 may form a space for receiving the filter 120. The drain pump 73 and/or the circulation pump 75 may be mounted in the case body 111.

The filter case 110 may include a filter inlet 113 for allowing water to enter. The filter inlet 113 may protrude from the case body 111. The filter inlet 113 may communicate an inside of the case body 111 with an outside of the case body 111. The filter inlet 113 may be connected to the connecting hose 71.

The filter case 110 may include a filter outlet 114 for draining water to the outside of the washing machine housing 11. The filter outlet 114 may protrude from the case body 111. The filter outlet 114 may communicate the inside of the case body 111 with the outside of the case body 111. The filter outlet 114 may be connected to the drain hose 74. The filter outlet 114 may be positioned adjacent to the drain pump 73.

The filter case 110 may include a circulation drain 115 for discharging water to the tub 20. The circulation drain 115 may protrude from the case body 111. The circulation drain 115 may communicate the inside of the case body 111 with the outside of the case body 111. The circulation drain 115 may be connected to the circulation hose 76. The circulation drain 115 may be positioned adjacent to the circulation pump 75.

For example, while the drain pump 73 is operating, water entering the filter case 110 through the filter inlet 113 may pass through the filter 120 and then be discharged to the outside of the filter case 110 through the filter outlet 114. For example, while the circulation pump 75 is operating, water entering the filter case 110 through the filter inlet 113 may be discharged to the outside of the filter case 110 through the circulation drain 115.

The filter case 110 may include a case opening 111a through which the filter 120 may pass. The filter 120 may be at least partially received in the filter case 110 through the case opening 111a. The filter 120 may be mounted to the filter case 110 through the case opening 111a.

The filter 120 may include a filter body 121 in which at least one hole for filtering foreign matter contained in water is formed. The hole of the filter body 121 may be provided such that foreign matter larger than a predetermined size may not pass through.

The filter body 121 may include an inlet opening 122 provided to correspond to the filter inlet 113 based on the filter 120 being mounted in the filter case 110. Water entering the inside of the filter case 110 through the filter inlet 113 may flow into the interior of the filter 120 through the inlet opening 122.

The filter 120 may include a filter cover 126 provided at one end of the filter body 121. Based on the filter 120 being mounted in the filter case 110, the filter cover 126 may be configured to cover the case opening 111a of the filter case 110. For example, the filter cover 126 may be formed integrally with the filter body 121, but is not limited thereto, and the filter cover 126 may also be provided in a separate configuration that is detachable from the filter body 121.

The filter cover 126 may be provided with a handle 129. Based on the filter 120 being mounted in the filter case 110, the handle 129 may be provided on one side of the filter cover 126 facing the outside of the filter case 110. Based on the filter 120 being mounted in the filter case 110, the filter 120 may be separated from the filter case 110 by manipulating the handle 129. While the filter 120 is inserted into the filter case 110, the filter 120 may be mounted in the filter case 110 by manipulating the handle 129. For example, the handle 129 may be provided as a separate configuration that is detachable from the filter cover 126, but is not limited thereto, and the handle 129 may also be formed integrally with the filter cover 126.

The filter module 100 may include a sealing member 130. The sealing member 130 may be provided to prevent water from escaping from the inside of the filter case 110 through the case opening 111a when the filter 120 is mounted in the filter case 110. The sealing member 130 may be mounted in the filter 120. For example, the sealing member 130 may be mounted on the filter cover 126.

The sealing member 130 may include a flexible material. The sealing member 130 may include a deformable material. The sealing member 130 may include a chemically resistant material. For example, the sealing member 130 may include silicone.

The sealing member 130 may be provided along an outer perimeter of the case opening 111a. The sealing member 130 may have a size larger than the case opening 111a. For example, the diameter of the sealing member 130 may be set to be larger than that of the case opening 111a.

Referring to FIGS. 6 and 8, the sealing member 130 according to various embodiments may have an annular shape. The sealing member 130 may be coupled to a coupling portion 126a formed in the filter cover 126. At least a portion of the sealing member 130 may be inserted and secured into the coupling portion 126a of the filter cover 126.

The sealing member 130 may include, based on the filter 120 being mounted in the filter case 110, a sealing body 131 provided to extend along the perimeter of the case opening 111a, and a mounting portion 132 is formed to allow a portion of the filter 120 to be inserted therein. In response to a portion of the filter 120 being inserted into the mounting portion 132, the sealing body 131 may extend along the perimeter of a portion of the filter 120 inserted into the mounting portion 132.

The sealing member 130 may include a sealing rib 133 provided on the radially outer side of the sealing body 131. The sealing rib 133 may extend bent from the extension portion 134. The sealing rib 133 may be spaced apart from the sealing body 131. The sealing rib 133 may extend in a direction approximately perpendicular to a radial direction of the sealing member 130. The sealing rib 133 may be provided to be in contact with the filter case 110 when the filter 120 is mounted in the filter case 110. The sealing rib 133 may extend along the outer perimeter of the sealing body 131.

The sealing member 130 may include the extension portion 134 extending radially outwardly from the periphery of the sealing body 131. The extension portion 134 may extend from the sealing body 131 to the sealing rib 133.

The sealing rib 133 may extend from the extension portion 134. The sealing rib 133 may extend in a direction approximately perpendicular to a direction in which the extension portion 134 extends.

The sealing member 130 may include a sealing groove 135. The sealing groove 135 may be formed by the sealing body 131, the sealing rib 133, and the extension portion 134. The sealing groove 135 may be arranged to communicate with the inside of the filter case 110. Water entering the inside of the filter case 110 may flow into the sealing groove 135.

In an example, a length d1 of the sealing rib 133 protruding from the extension portion 134 may be set to be 2.7 mm to 6.7 mm. For example, the length d1 of the sealing rib 133 protruding from the extension portion 134 may be set to be approximately 4.7 mm.

In an example, the thickness d2 of the extension portion 134 perpendicular to the radial direction of the sealing member 130 may be set to be 0.5 mm to 2.5 mm. For example, the thickness of the extension portion 134 perpendicular to the radial direction of the sealing member 130 may be set to be approximately 1.5 mm.

In an example, the thickness d3 of the sealing body 131 perpendicular to the radial direction of the sealing member 130 may be set to 1.5 mm to 4.5 mm. For example, the thickness d3 of the sealing body 131 perpendicular to the radial direction of the sealing member 130 may be set to approximately 3.0 mm.

In an example, a length d4 of the extension portion 134 extending from the sealing body 131 to the sealing rib 133 may be set to 0.3 mm to 2.3 mm. For example, the length d4 of the extension portion 134 extending from the sealing body 131 to the sealing rib 133 may be set to approximately 1.3 mm.

In an example, the diameter of the sealing member 130 may be set to 43.6 mm to 61.6 mm. For example, the diameter of the sealing member 130 may be set to approximately 52.6 mm.

In an example, the ratio of the length d1 of the sealing rib 133 protruding from the extension portion 134, the thickness d2 of the extension portion 134 perpendicular to the radial direction of the sealing member 130, and the length d4 of the extension portion 134 extending from the sealing body 131 to the sealing rib 133 may be set to approximately 3:1:1.

Referring to FIG. 9, water entering the filter case 110 may flow into the sealing groove 135 of the sealing member 130 through a gap G between the filter case 110 and the filter cover 126. The sealing member 130 may be partially deformed by hydraulic pressure (also referred to as water pressure) of the water flowing into the sealing groove 135. The water flowing into the sealing groove 135 may press the sealing member 130 against the case body 111 and the filter cover 126. The water flowing into the sealing groove 135 may bring the sealing rib 133 into close contact with the case body 111. The water flowing into the sealing groove 135 may bring the extension portion 134 into close contact with the filter cover 126.

According to an embodiment of the present disclosure, the filter module 100 may be arranged such that, based on the filter 120 being mounted in the filter case 110, the sealing rib 133 and the extension portion 134 of the sealing member 130 are pressed more tightly against the filter case 110 and the filter 120 by hydraulic pressure when water is introduced into the interior of the filter case 110 than when water is not introduced into the interior of the filter case 110. According to an embodiment of the present disclosure, the filter module 100 may be arranged such that the sealing rib 133 and the extension portion 134 are pressed less tightly against the filter case 110 and the filter 120 when the interior of the filter case 110 is not under hydraulic pressure than when the interior of the filter case 110 is under hydraulic pressure.

As a result, the filter module 100 according to an embodiment of the present disclosure may relatively reduce the frictional force between the sealing member 130 and the filter case 110 during mounting of the filter 120 to the filter case 110, thereby reducing the force required to mount the filter 120.

Furthermore, the filter module 100 according to an embodiment of the present disclosure may relatively reduce the frictional force between the sealing member 130 and the filter case 110 during the mounting of the filter 120 to the filter case 110, thereby reducing the force required to mount the filter 120 to the filter case 110 even though there is no lubricant between the sealing member 130 and the filter case 110. The filter module 100 according to an embodiment of the present disclosure may also omit the lubricant for the sealing member 130, thereby reducing cost.

In addition, since the filter module 100 according to an embodiment of the present disclosure is arranged such that the sealing member 130 is pressed against the filter case 110 and the filter 120 by using the hydraulic pressure inside the filter case 110, it is not necessary to press the sealing member 130 against the filter case 110 when the filter 120 is mounted to the filter case 110, and therefore, it is not necessary to rotate the filter 120 several times when the filter 120 is mounted to the filter case 110. The filter module 110 according to an embodiment of the present disclosure may allow the filter 120 to be mounted to the filter case 110 by rotating the filter 120 by a relatively small angle. In an example, referring to FIG. 4 and FIG. 10, the filter module 100 may be arranged to be mountable to the filter 120 by rotating the filter 60 by approximately 60 degrees.

The filter module 100 according to an embodiment of the present disclosure may improve the sealing performance of a sealing member 130 by utilizing the hydraulic pressure of water flowing into the filter module 100.

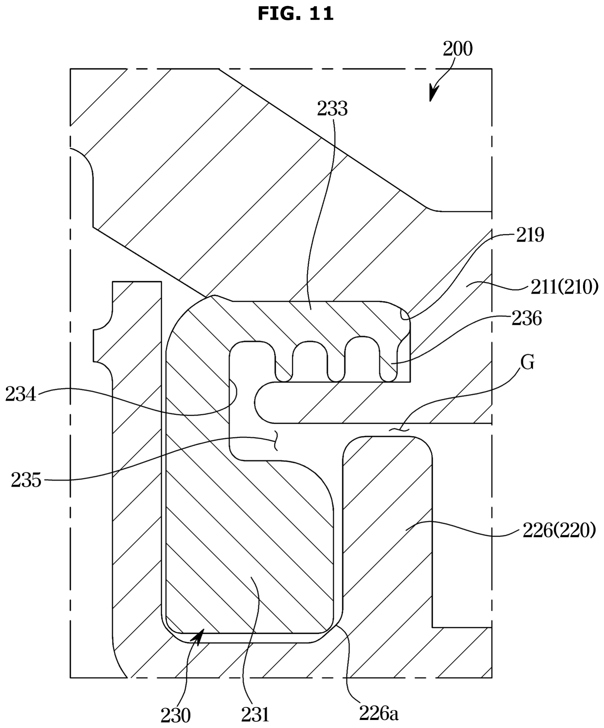

FIG. 11 is an enlarged cross-sectional view showing a portion of the filter module according to an embodiment of the present disclosure.

Referring to FIG. 11, a filter module 200 according to an embodiment of the present disclosure will be described. The filter module 200 shown in FIG. 11 may have a configuration substantially similar to the configuration of the filter module 100 shown in FIGS. 1 to 10, and thus, a detailed description thereof may be omitted. In the following, a configuration of the filter module 200 shown in FIG. 11 that differs from the configuration of the filter module 100 shown in FIGS. 1 to 10 will be described.

Referring to FIG. 11, the filter module 200 according to an embodiment of the present disclosure may include a filter case 210 and a filter 220 receivable within the filter case 210. The filter case 210 may include a case body 211. The filter 220 may include a filter cover 226.

The filter module 200 may include a sealing member 230. The sealing member 230 may be provided to prevent water from leaking out through the case opening from the inside of the filter case 210 when the filter 220 is mounted in the filter case 210. For example, the sealing member 230 may be mounted on the filter cover 226.

The sealing member 230 may be provided along the outer perimeter of the case opening. The sealing member 230 may have a size larger than the case opening. For example, the diameter of the sealing member 230 may be set to be larger than the diameter of the case opening.

The sealing member 230 may be coupled to a coupling portion 226a formed on the filter cover 226. At least a portion of the sealing member 230 may be inserted into and secured to the coupling portion 226a of the filter cover 226.

The sealing member 230 may include a sealing body 231, a sealing rib 233, an extension portion 234, and a sealing groove 235.

The sealing member 230 according to an embodiment may include a sealing protrusion 236. For example, the sealing protrusions 236 may be provided in a plurality. The sealing protrusions 236 may be disposed on the sealing rib 233.

The filter case 210 may include a case groove 219 into which the sealing rib 233 and the sealing protrusions 236 are inserted. The sealing protrusions 236 may protrude from the sealing rib 233 toward an inner surface of the case groove 219. The sealing protrusions 236 may be arranged to separate a space formed by the case groove 219.

The filter module 200 according to an embodiment of the present disclosure may have an improved sealing performance because when water entering the interior of the filter case 210 flows into the sealing groove 235 through the gap G formed between the filter case 210 and the filter cover 226, the sealing rib 233 and/or the extension portion 234 may be deformed under the hydraulic pressure and the sealing protrusions 236 may block water flowing out of the filter case 210.

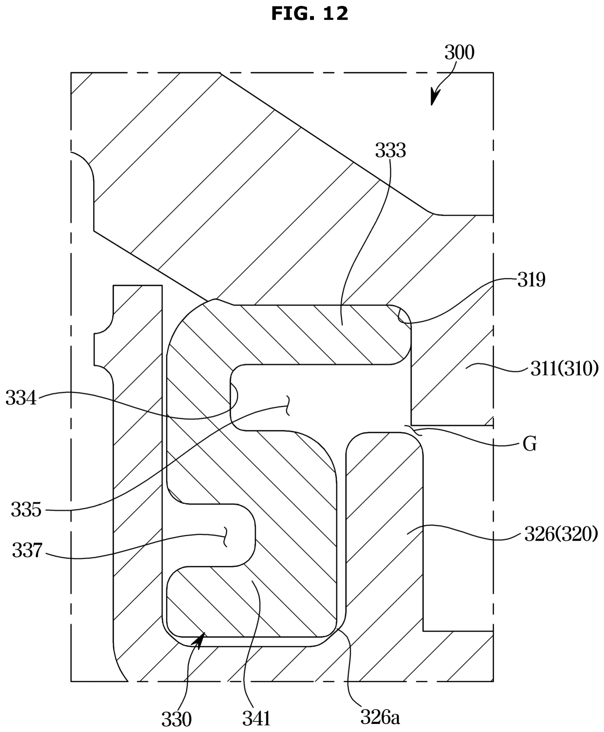

FIG. 12 is an enlarged cross-sectional view illustrating a portion of a filter module according to an embodiment of the present disclosure.

Referring to FIG. 12, a filter module 300 according to an embodiment of the present disclosure will be described. The filter module 300 shown in FIG. 12 may have a configuration substantially similar to the configuration of the filter module 100 shown in FIGS. 1 to 10, and thus, a detailed description thereof may be omitted. In the following, a configurations of the filter module 300 shown in FIG. 12 that differs from the configuration of the filter module 100 shown in FIGS. 1 to 10 will be described.

Referring to FIG. 12, the filter module 300 according to an embodiment of the present disclosure may include a filter case 310 and a filter 320 receivable within the filter case 310. The filter case 310 may include a case body 311. The filter 320 may include a filter cover 326.

The filter module 300 may include a sealing member 330. The sealing member 330 may be provided to prevent water from escaping from the inside of the filter case 310 through the case opening when the filter 320 is mounted in the filter case 310. For example, the sealing member 330 may be mounted on the filter cover 326.

The sealing member 330 may be provided along the outer perimeter of the case opening. The sealing member 330 may have a size larger than the case opening. For example, the diameter of the sealing member 330 may be set to be larger than the diameter of the case opening.

The sealing member 330 may be coupled to a coupling portion 326a formed on the filter cover 326. At least a portion of the sealing member 330 may be inserted into and secured to the coupling portion 326a of the filter cover 326.

The sealing member 330 may include a sealing body 331, a sealing rib 333, an extension portion 334, and a sealing groove 335.

The sealing member 330 according to an embodiment may include a deformation groove 337. The deformation groove 337 may be provided in the sealing body 331. The deformation groove 337 may open in a direction opposite to a direction in which the sealing groove 335 opens.

The filter module 300 according to an embodiment of the present disclosure may have an improved sealing performance because when water entering the interior of the filter case 310 flows into the sealing groove 335 through the gap G formed between the filter case 310 and the filter cover 326, the sealing rib 333 and/or the extension portion 334 may be deformed under the hydraulic pressure and the sealing body 331 may also be deformed by the deformation groove 337.

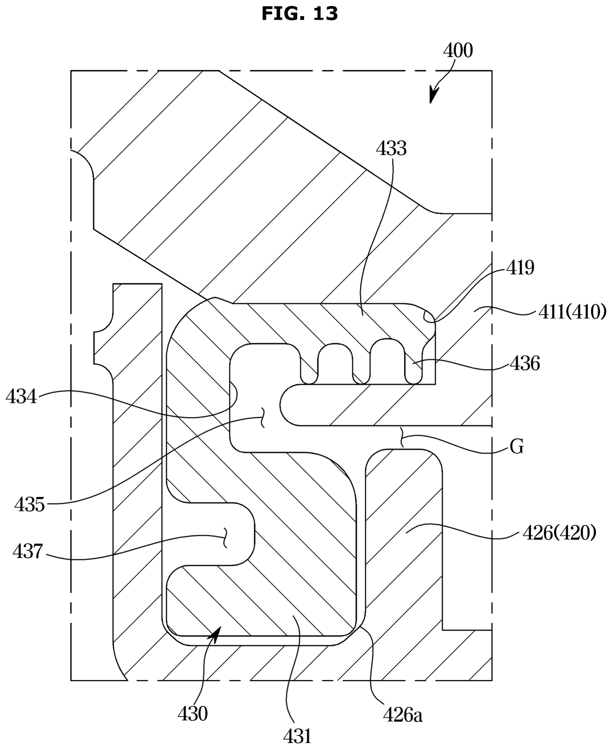

FIG. 13 is an enlarged cross-sectional view illustrating a portion of a filter module according to an embodiment of the present disclosure.

Referring to FIG. 13, a filter module 400 according to an embodiment of the present disclosure will be described. The filter module 400 shown in FIG. 13 may have a configuration substantially similar to the configuration of the filter module 100 shown in FIGS. 1 to 10, and therefore, a detailed description thereof may be omitted. A configuration of the filter module 400 shown in FIG. 13 that differs from the configuration of the filter module 100 shown in FIGS. 1 to 10 will be described below.

Referring to FIG. 13, the filter module 400 according to an embodiment of the present disclosure may include a filter case 410 and a filter 420 receivable within the filter case 410. The filter case 410 may include a case body 411. The filter 420 may include a filter cover 426.

The filter module 400 may include a sealing member 430. The sealing member 430 may be provided to prevent water from escaping from the inside of the filter case 410 through the case opening when the filter 420 is mounted in the filter case 410. For example, the sealing member 430 may be mounted on the filter cover 426.

The sealing member 430 may be provided along the outer perimeter of the case opening. The sealing member 430 may have a larger size than the case opening. For example, the diameter of the sealing member 430 may be set to be larger than the diameter of the case opening.

The sealing member 430 may be coupled to a coupling portion 426a formed in the filter cover 426. At least a portion of the sealing member 430 may be inserted into and secured to the coupling portion 426a of the filter cover 426.

The sealing member 430 may include a sealing body 431, a sealing rib 433, an extension portion 434, and a sealing groove 435.

The sealing member 430 according to an embodiment may include a sealing protrusion 436. For example, the sealing protrusions 436 may be provided in a plurality. The sealing protrusions 436 may be disposed on the sealing rib 433.

The filter case 410 may include a case groove 419 into which the sealing rib 433 and the sealing protrusions 436 are inserted. The sealing protrusions 436 may protrude from the sealing rib 433 toward an inner surface of the case groove 419. The sealing protrusions 436 may be arranged to separate a space formed by the case groove 419.

The sealing member 430 according to an embodiment may include a deformation groove 437. The deformation groove 437 may be provided in the sealing body 431. The deformation groove 437 may open in a direction opposite to a direction in which the sealing groove 435 opens.

The filter module 400 according to an embodiment of the present disclosure may have an improved sealing performance because when water entering the interior of the filter case 410 flows into the sealing groove 435 through the gap G formed between the filter case 410 and the filter cover 426, the sealing rib 433 and/or the extension portion 434 may be deformed under the hydraulic pressure and the sealing protrusions 436 may block water flowing out of the filter case 210 and the sealing body 431 may also be deformed by the deformation groove 437.

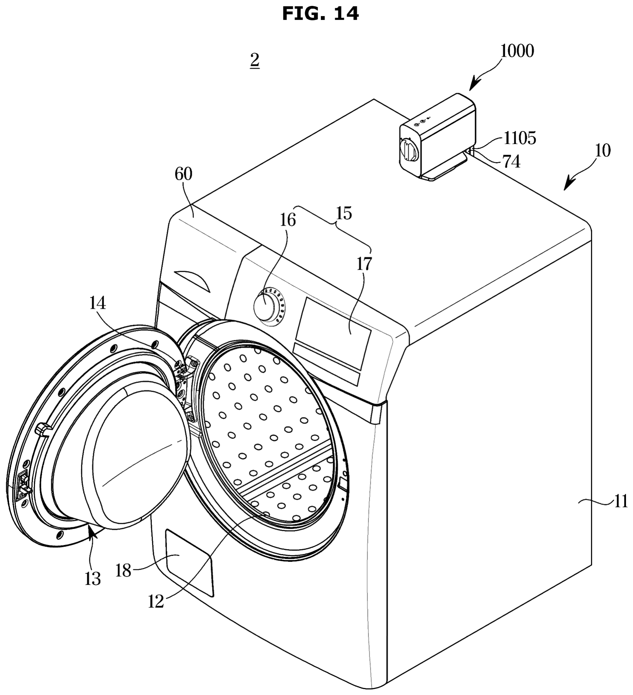

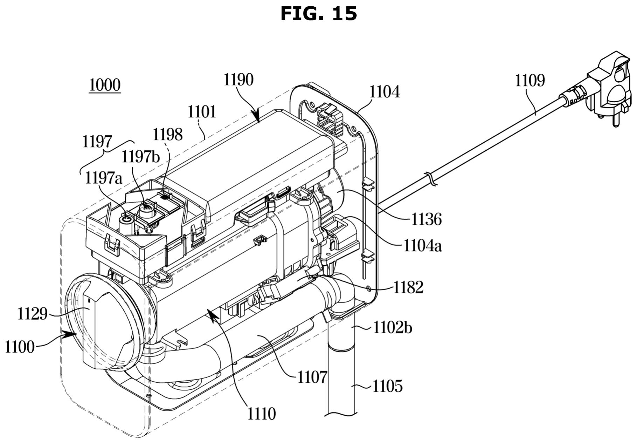

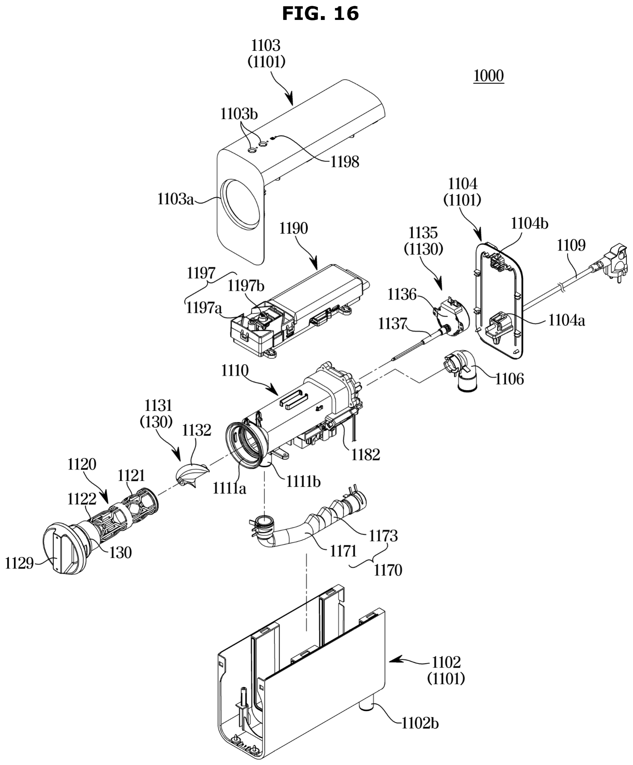

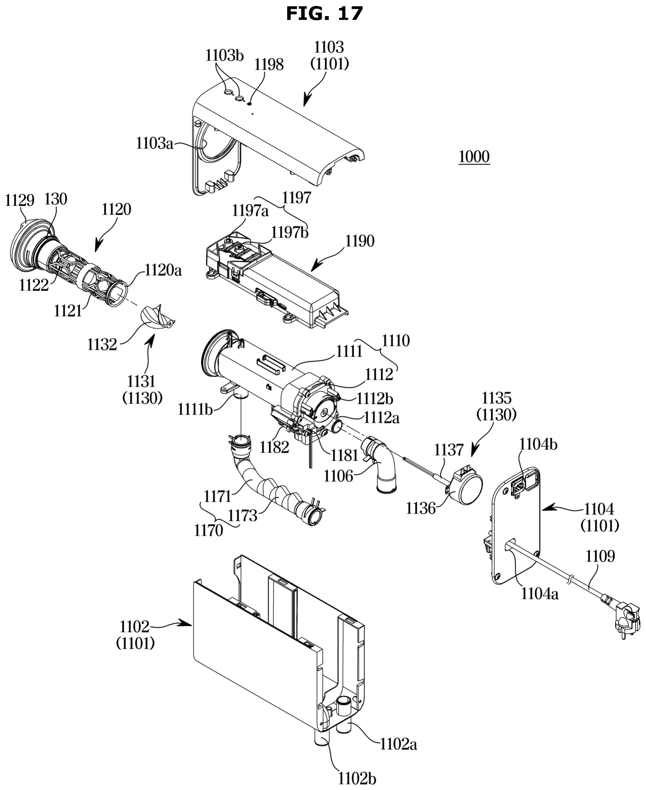

FIG. 14 is a view illustrating a clothes treating apparatus according to an embodiment of the present disclosure. FIG. 15 is a view illustrating an inside of a filter apparatus according to an embodiment of the present disclosure. FIG. 16 is an exploded view illustrating the filter apparatus according to an embodiment of the present disclosure. FIG. 17 is an exploded view illustrating the filter apparatus according to an embodiment of the present disclosure at a different angle from FIG. 16.

Referring to FIG. 14, a clothes treating apparatus 2 according to an embodiment of the present disclosure may include the washing machine 10 and a filter apparatus 1000 for filtering foreign matter from water discharged from the washing machine 10. A configuration of the washing machine 10 of the clothes treating apparatus 2 according to an embodiment of the present disclosure may include the same configuration as the washing machine 10 shown in FIGS. 1 to 3, and thus a detailed description thereof may be omitted.

Referring to FIGS. 14 to 17, the filter apparatus 1000 according to an embodiment may include a filter housing 1101 that receives various components. The filter housing 1101 may include a housing body 1102, a housing cover 1103, and a housing bracket 1104. For example, the housing body 1102, the housing cover 1103, and the housing bracket 1104 may be each provided as separate configurations. For example, the housing body 1102 may be formed integrally with the housing cover 1103. For example, the housing body 1102 may be formed integrally with the housing bracket 1104. For example, the housing cover 1103 may be formed integrally with the housing bracket 1104. For example, the housing body 1102 may be formed integrally with the housing cover 1103 and the housing bracket 1104.

The housing body 1102 may form a space for receiving various components. The housing body 1102 may have a cross-section that is an approximately U-shaped and is perpendicular to a direction in which a filter 1120 received therein extends. The housing body 1102 may have a box shape with an open front, rear, and upper surface. The housing body 1102 may be detachably coupled to the housing cover 1103 and/or the housing bracket 1104.

The housing body 1102 may include a housing inlet 1102a for allowing water to enter the inside of the filter apparatus 1000, and a housing outlet 1102b for discharging water inside the filter apparatus 1000 to the outside of the filter apparatus 1000. The housing inlet 1102a and/or the housing outlet 1102b may be positioned at a lower portion of the housing body 1102.

The housing inlet 1102a may be connected to the drain hose 74 of the washing machine 10. The housing outlet 1102b may be connected to the drain line 1105.

The housing cover 1103 may be configured to cover the open front and upper surface of the housing body 1102. The housing cover 1103 may be detachably connected to the housing body 1102 and/or the housing bracket 1104. The housing cover 1103 may include a cover opening 1103a formed to allow the filter 1120 to pass therethrough. The housing cover 1103 may include an installation portion 1103b in which a user interface device 1197 is installed. The user interface device 1197 may be at least partially exposed to the outside of the filter apparatus 1000 through the installation portion 1103b.

The housing bracket 1104 may be configured to cover the open rear surface of the housing body 1102. The housing bracket 1104 may be detachably coupled to the housing body 1102 and/or the housing cover 1103. The housing bracket 1104 may include a cable opening 1104a formed to allow a power cable 1109 to pass therethrough. The housing bracket 1104 may include a connector mounting portion 1104b formed to allow a connector for communication with an external device, including the washing machine 10 or the like, to be connected.

The filter apparatus 1000 may include a filter module 1100 positioned within the filter housing 1101. The filter module 1100 may include a filter case 1110 and the filter 1120.

The filter case 1110 may form a path through which water entering the filter apparatus 1000 passes. The filter case 1110 may be provided to be receivable the filter 1120. The filter case 1110 may include a case body 1111 and a case cover 1112.

The case body 1111 may extend along a direction in which the filter 1120 received therein extends. The case body 1111 may include a case opening 1111a formed to allow the filter 1120 to pass therethrough. The case opening 1111a may be provided to correspond to the cover opening 1103a. The case opening 1111a may be positioned closer to a case outlet 1111b than to a case inlet 1112a, and may be arranged to allow the filter 1120 to pass therethrough.

The case body 1111 may include the case outlet 1111b for discharging water entering the filter case 1110 from the filter case 1110. The case outlet 1111b may be positioned at a lower portion of the case body 1111. The case outlet 1111b may be positioned adjacent to the case opening 1111a. The case outlet 1111b may be positioned close to the other end opposite to one end at which a filter opening 1120a of the filter 1120 is positioned. The case outlet 1111b may be positioned closer to a second filter portion 1122 than to a first filter portion 1121 of the filter 1120.

The case outlet 1111b may be connected to the housing outlet 1102b. The filter apparatus 1000 may include a discharge guide 1107 for connecting the case outlet 1111b and the housing outlet 1102b.

The case cover 1112 may be detachably connected to the other end opposite to one end at which the case opening 1111a of the case body 1111 is positioned. For example, the case cover 1112 may be formed integrally with the case body 1111.

The case cover 1112 may include the case inlet 1112a for allowing water to enter the inside of the filter case 1110. The case inlet 1112a may be connected to the housing inlet 1102a. The filter apparatus 1000 may include an inlet guide 1106 for connecting the case inlet 1112a and the housing inlet 1102a.

The case cover 1112 may include a motor mounting portion 1112b for mounting a filter cleaner 1130. The motor mounting portion 1112b may be positioned above the case inlet 1112a. The motor mounting portion 1112b may be equipped with a cleaning motor 1136 of the filter cleaner 1130.

The filter module 1100 of the filter apparatus 1000 may include the filter 1120 detachably couplable to the filter case 1110. The filter 1120 may be configured to filter foreign matter of a fine size. The filter 1120 may be configured to be capable of filtering microplastics having a size of approximately 5 mm or less. The filter 1120 may include a mesh filter. The filter 1120 may extend approximately between the case inlet 1112a and the case outlet 1111b.

The filter 1120 may include the filter opening 1120a that opens toward the case inlet 1112a when mounted in the filter case 1110. Water entering the filter case 1110 through the case inlet 1112a may flow into the interior of the filter 1120 through the filter opening 1120a.

The filter 1120 may include the first filter portion 1121 and the second filter portion 1122. The first filter portion 1121 may be positioned closer to the case inlet 1112a than the second filter portion 1122. Water entering the filter case 1110 may be filtered for foreign matter in the first filter portion 1121, or may pass through the first filter portion 1121 without being filtered out in the first filter portion 1121 and then be filtered for foreign matter in the second filter portion 1122. The first filter portion 1121 and the second filter portion 1122 may be arranged sequentially along the direction in which the filter 1120 extends. Foreign matter transported from the first filter portion 1121 by the filter cleaner 1130 may be collected in the second filter portion 1122.

The filter module 1100 may include a filter cover 1126 provided at one end of the filter 1120. Based on the filter 1120 being mounted in the filter case 1110, the filter cover 1126 may be configured to cover the case opening 1111a of the filter case 1110. For example, the filter cover 1126 may be formed integrally with the filter 1120, but is not limited thereto, and the filter cover 1126 may be provided as a separate configuration that is removable from the filter 1120. For example, the filter 1120 may include the filter cover 1126.

The filter module 1100 may include a handle 1129. Based on the filter 1120 being mounted in the filter case 1110, the handle 1129 may be disposed on one side of the filter cover 1126 facing an outside of the filter case 1110. Based on the filter 1120 being mounted in the filter case 1110, the filter 1120 may be removed from the filter case 1110 by manipulating the handle 1129. While the filter 1120 is inserted into the filter case 1110, the filter 1120 may be mounted in the filter case 1110 by manipulating the handle 1129. For example, the handle 1129 may be provided as a separate configuration that is detachable from the filter cover 1126, but is not limited thereto, and the handle 1129 may also be formed integrally with the filter cover 1126.

The filter apparatus 1000 may include the filter cleaner 1130 for cleaning the filter 1120. The filter cleaner 1130 may be mounted to a filter case 1110. The filter cleaner 1130 may include a cleaning member 1131 for cleaning a surface of the filter 1120 on which foreign matter is filtered, and a cleaning driver 1135 for driving the cleaning member 1131.

The cleaning member 1131 may be positioned on the inside of the filter 1120. The cleaning member 1131 may be arranged to correspond to the first filter portion 1121 of the filter 1120. The cleaning member 1131 may have a blade 1132 extending in a helical shape. The blade 1132 may extend radially from a rotating shaft of the cleaning member 1131. The cleaning member 1131 may be arranged to contact the surface of the filter 1120 on which foreign matter is filtered. The cleaning member 1131 may be arranged to contact an inner surface of the filter 1120. For example, the cleaning member 1131 may include a plurality of brushes.

The cleaning member 1131 may be configured to transport foreign matter filtered from a portion of the filter 1120 close to the case inlet 1112a to a portion of the filter 1120 close to the case outlet 1111b of the filter 1120, while being driven by the cleaning driver 1135. The cleaning member 1131 may be configured to transport filtered foreign matter from the first filter portion 1121 to the second filter portion 1122. For example, the cleaning member 1131 may be rotatably disposed within the filter 1120. The cleaning member 1131 may include a flexible material. The cleaning member 1131 may rotate in contact with the filter 1120 to clean foreign matter filtered by the filter 1120. The cleaning member 1131 may scrape and remove foreign matter adhering to the surface of the filter 1120 on which the foreign matter is filtered, while being driven in contact with the filter 1120. For example, the cleaning member 1131 may be slidably disposed within the filter 1120.

The cleaning member 1131 may be configured to transport foreign matter filtered by the first filter portion 1121 to the second filter portion 1122, and as water flowing into the filter case 1110 flows from the first filter portion 1121 to the second filter portion 1122, foreign matter filtered by the first filter portion 1121 may be efficiently collected in the second filter portion 1122. In consideration of the flow of water passing through the filter 1120, the cleaning member 1131 may be disposed on an upstream side, and the case outlet 1111b may be disposed on a downstream side.

The cleaning driver 1135 may include the cleaning motor 1136 and a motor shaft 1137. The cleaning motor 1136 may be configured to generate power to drive the cleaning member 1131. The motor shaft 1137 may be connected to the cleaning member 1131. The cleaning motor 1136 may be mounted in the filter case 1110. The cleaning motor 1136 may be positioned closer to the case inlet 1112a than the case outlet 1111b.

The filter apparatus 1000 may include a circuitry 1190 positioned on an inside of the filter housing 1101. The circuitry 1190 may be positioned on an upper portion of the inside of the filter housing 1101. The circuitry 1190 may be positioned on one side of the filter case 1110. For example, the circuitry 1190 may be positioned on an upper side of the filter case 1110. For example, the circuitry 1190 may be positioned on the upper side of the filter 1120.

The circuitry 1190 may be provided with a controller 1191 for controlling the filter apparatus 1000 and a communicator 1199 for communicating with the washing machine 10.

The filter apparatus 1000 may include the user interface device 1197 positioned on an upper side of the circuitry 1190. The user interface device 1197 may be at least partially exposed to the outside of the filter apparatus 1000 through the installation portion 1103b of the filter housing 1101. The user interface device 1197 may be positioned on an upper surface of the filter apparatus 1000. The user interface device 1197 may include a first button 1197a and a second button 1197b. The first button 1197a may include one of a power button and a Wi-Fi connection button. The second button 1197b may include one of a power button and a Wi-Fi connection button that is different from the first button 1197a.

The filter apparatus 1000 may include a display 1198 that displays visualized information related to the filter apparatus 1000. The display 1198 may be positioned on the upper surface of the filter apparatus 1000. For example, the display 1198 may be provided as a configuration of the user interface device 1197.

The filter apparatus 1000 may include a filter sensor 1181 that obtains information about a state of the filter 1120. The filter sensor 1181 may be mounted in the filter case 1110. The filter sensor 1181 may be positioned on the outside of the filter case 1110. The filter sensor 1181 may be positioned to correspond to the second filter portion 1122 of the filter 1120 mounted in the filter case 1110. For example, the filter sensor 1181 may include a magnetic sensor. For example, the filter sensor 1181 may include a light sensor.

The filter apparatus 1000 may include a water supply sensor 1182 for detecting water being supplied to the filter apparatus 1000. The water supply sensor 1182 may be mounted in a lower portion of the filter case 1110. The water supply sensor 1182 may be positioned close to the case inlet 1112a of the filter case 1110.

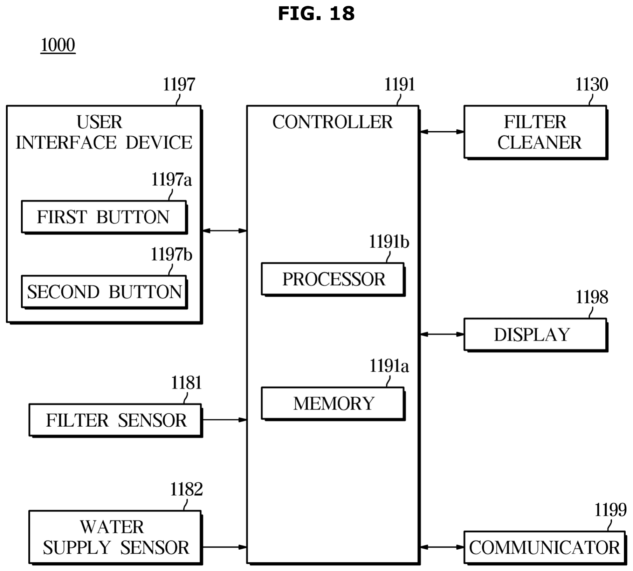

FIG. 18 is a control block diagram illustrating the filter apparatus according to an embodiment of the present disclosure.

Referring to FIG. 18, the filter apparatus 1000 according to an embodiment may include the user interface device 1197 for interacting with a user, the filter sensor 1181, the water supply sensor 1182, the filter cleaner 1130, the display 1198, the communicator 1199, and the controller 1191 for controlling various configurations of the filter apparatus 1000.

The controller 1191 may include at least one memory 1191a and at least one processor 1191b to perform the operations described above and the operations described below.

In an embodiment, the controller 1191 may include at least one memory 1191a that stores data in the form of algorithms and/or programs for controlling the operation of configurations within the filter apparatus 1000, and at least one processor 1191b that performs the operations described above and the operations described below using the data stored in the at least one memory 1191a. The memory 1191a and the processor 1191b may each be implemented as separate chips. The processor 1191b may include one or two more processor chips or one or two more processing cores. The memory 1191a may include one or two more memory chips or one or two more memory blocks. Alternatively, the memory 1191a and the processor 1191b may also be implemented as a single chip.

The controller 1191 may process user input received via the user interface device 1197, and may control various configurations of the filter apparatus 1000 (e.g., the filter cleaner 1130, the display 1198) based on the processing of the user input.

The user interface device 1197 may include the first button 1197a and the second button 1197b, and may operate based on a control signal from the controller 1191.

The filter sensor 1181 may be mounted in the filter case 1110. The filter sensor 1181 may detect the amount of foreign matter collected in the filter 1120.

For example, the filter apparatus 1000 may include a magnetic member that rotates together with the motor shaft 1137 as the cleaning driver 1135 operates, and the filter sensor 1181 may be configured to detect the magnetic member that rotates together with the motor shaft 1137. For example, the filter sensor 1181 may detect a magnetic field of the magnetic member and output a signal. The controller 1191 may detect a clogging of the filter 1120 based on the rotation of the cleaning motor 1136 detected by the filter sensor 1181.

However, the type of the filter sensor 1181 is not limited thereto, and the filter sensor 1181 may include an optical sensor (e.g., an infrared sensor) that detects the amount of foreign matter collected in the filter 1120, and any configuration capable of detecting the amount of foreign matter collected in the filter 1120 may be employed as the filter sensor 1181.

The water supply sensor 1182 may be mounted in the filter case 1110. The water supply sensor 1182 may detect water flowing into the filter case 1110.

For example, the water supply sensor 1182 may include an electrostatic capacitance sensor that detects water entering the interior of the filter case 1110. However, the type of the water supply sensor 1182 is not limited thereto, and any configuration capable of detecting water entering the filter case 1110 may be employed as the water supply sensor 1182.

The controller 1191 may process the sensor data received via the filter sensor 1181 and/or the water supply sensor 1182, and may control various configurations of the filter apparatus 1000 (e.g., the filter cleaner 1130) based on the processing of the sensor data.

The filter cleaner 1130 may include the cleaning member 1131 that is slidably and rotatably inserted into the inner surface of the filter 1120, and the cleaning motor 1136 for rotating the cleaning member 1131.

The controller 1191 may control the filter cleaner 1130.

In an embodiment, the controller 1191 may control a drive circuitry that applies drive current to the cleaning motor 1136. The drive circuitry may provide drive current to the cleaning motor 1136 in response to a drive signal from the controller 1191. The drive circuitry may include a rectification circuitry that rectifies alternating current (AC) power from an external power source, a direct current (DC) link circuitry that removes ripple from the rectified power and outputs DC power, an inverter circuitry that converts the DC power into drive power in the form of a sinusoidal wave and outputs the drive current to the cleaning motor 1136, a current sensor that measures the drive current supplied to the cleaning motor 1136, and a gate driver that turns on/off a switching element included in the inverter circuitry based on the drive signal from the controller 1191.

The drive circuitry connected to the cleaning motor 1136 may include configurations for driving a DC motor.

The display 1198 may display visualized information associated with the filter apparatus 1000. For example, the display 1198 may be provided as a separate configuration from the user interface device 1197. For example, the display 1198 may be provided as a configuration of the user interface device 1197.

The communicator 1199 may transmit data to an external device or receive data from an external device based on a control signal from the controller 1191. For example, the communicator 1199 may communicate with a server and/or a user terminal device and/or a home appliance including the washing machine 10 to transmit and receive various data.

To this end, the communicator 1199 may establish a direct (e.g., wired) communication channel or a wireless communication channel between the external devices, and support the performance of the communication through the established communication channel. According to an embodiment, the communicator 1199 may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or wide area network WAN)). These various types of communication modules may be integrated as a single component (e.g., a single chip) or implemented as a plurality of separate components (e.g., multiple chips).

In various embodiments, the communicator 1199 may establish communication with a user terminal device via a server.

In various embodiments, the communicator 1199 may include a Wi-Fi module, and may communicate with an external server and/or a user terminal device based on establishing communication with an AP within the home.

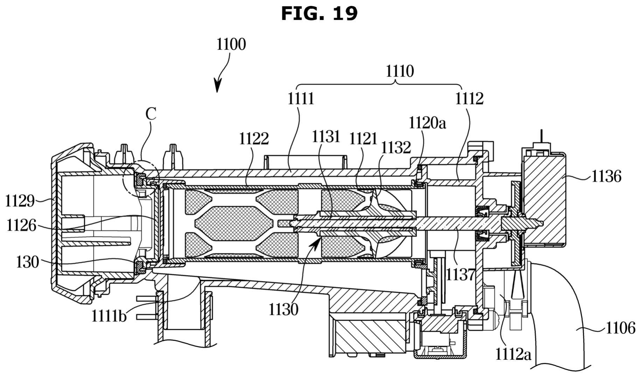

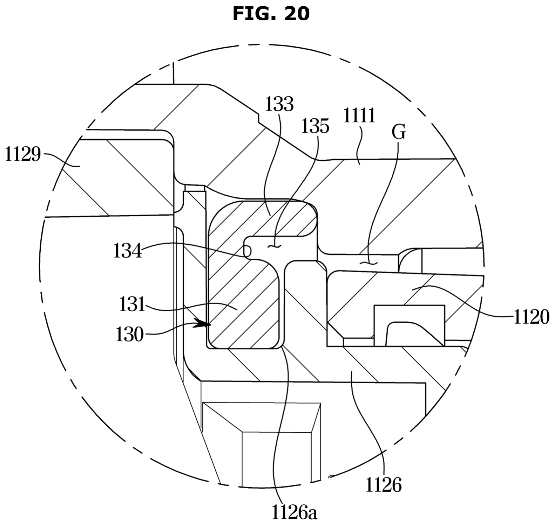

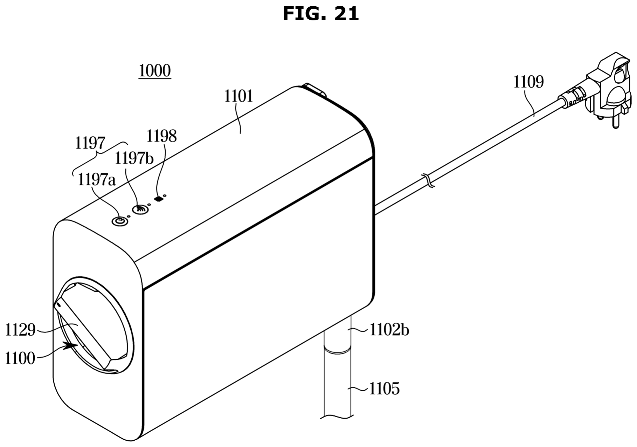

FIG. 19 is a cross-sectional view illustrating some configurations of the filter apparatus according to an embodiment of the present disclosure. FIG. 20 is an enlarged view of portion C shown in FIG. 19. FIG. 21 is a view illustrating the filter of the filter module according to an embodiment of the present disclosure in a state in which the filter is rotated to be separated from the filter case.

Referring to FIGS. 19 to 21, the filter module 1100 of the filter apparatus 1000 may include the sealing member 130. The sealing member 130 may be arranged to prevent water from escaping from the inside of the filter case 1110 through the case opening 1111a when the filter 1120 is mounted in the filter case 1110.

The configuration of the sealing member 130 of the filter module 1100 of the clothes treating apparatus 2 shown in FIGS. 14 to 21 is the same as the configuration of the sealing member 130 of the washing machine 10 of the clothes treating apparatus 1 shown in FIGS. 1 to 10, and a detailed description thereof may be omitted. In addition, the filter module 1100 of the clothes treating apparatus 2 shown in FIGS. 14 to 21 is described as employing the sealing member 130 having the same configuration as the sealing member 130 of the washing machine 10 of the clothes treating apparatus 1 shown in FIGS. 1 to 10, but is not limited thereto, and the sealing members 230, 330, and 430 shown in FIGS. 11 to 13 may be applicable to the filter module 1100 of the clothes treating apparatus 2 shown in FIGS. 14 to 21.

According to an embodiment, the sealing member 130 of the filter module 1100 may be mounted in the filter cover 1126. The sealing member 130 may be provided along the outer perimeter of the case opening 1111a. The sealing member 130 may have a size larger than the case opening 1111a. For example, the diameter of the sealing member 130 may be arranged to be larger than the diameter of the case opening 1111a. The sealing member 130 may be coupled to the coupling portion 1126a formed on the filter cover 1126. At least a portion of the sealing member 130 may be inserted into and secured to the coupling portion 1126a of the filter cover 1126.

The sealing rib 133 of the sealing member 130 may be arranged so as to be in contact with the filter case 1110 based on the filter 1120 being mounted in the filter case 1110.

The sealing groove 135 may be arranged so as to be in communication with the inside of the filter case 1110. Water entering the inside of the filter case 1110 may flow into the sealing groove 135.

The water entering the filter case 1110 may flow into the sealing groove 135 of the sealing member 130 through the gap G between the filter case 1110 and the filter cover 1126. The sealing member 130 may be partially deformed by hydraulic pressure of water flowing into the sealing groove 135. Water flowing into the sealing groove 135 may press the sealing member 130 against the filter case 1110. Water flowing into the sealing groove 135 may bring the sealing rib 133 into close contact with the filter case 1110.

According to an embodiment of the present disclosure, the filter module 1100 may be arranged such that, based on the filter 1120 being mounted in the filter case 1110, the sealing rib 133 and the extension portion 134 of the sealing member 130 are pressed more tightly against the filter case 1110 by hydraulic pressure when water is introduced into the interior of the filter case 1110 than when water is not introduced into the interior of the filter case 1110. According to an embodiment of the present disclosure, the filter module 1100 may be arranged such that the sealing rib 133 and the extension portion 134 are pressed less tightly against the filter case 1110 when the interior of the filter case 1110 is not under hydraulic pressure than when the interior of the filter case 1110 is under hydraulic pressure.

As a result, the filter module 1100 according to an embodiment of the present disclosure may relatively reduce the frictional force between the sealing member 130 and the filter case 1110 during mounting of the filter 1120 in the filter case 1110, thereby reducing the force required to mount the filter 1120.

In addition, the filter module 1100 according to an embodiment of the present disclosure may relatively reduce the frictional force between the sealing member 130 and the filter case 1110 during the mounting of the filter 1120 in the filter case 1110, thereby reducing the force required to mount the filter 1120 in the filter case 1110 even though there is no lubricant between the sealing member 130 and the filter case 1110. The filter module 1100 according to an embodiment of the present disclosure may omit the lubricant for the sealing member 130, thereby reducing the cost.

In addition, since the filter module 1100 according to an embodiment of the present disclosure is arranged such that the sealing member 130 is pressed against the filter case 1110 by using the hydraulic pressure inside the filter case 1110, it is not necessary to press the sealing member 130 against the filter case 1110 when the filter 1120 is mounted in the filter case 1110, and therefore, it is not necessary to rotate the filter 1120 several times when the filter 1120 is mounted in the filter case 1110. The filter module 1110 according to an embodiment of the present disclosure may allow the filter 1120 to be mounted in the filter case 1110 by rotating the filter 1120 by a relatively small angle. For example, referring to FIG. 15 and FIG. 21, the filter module 1100 may be arranged to be mountable in the filter case 1110 by rotating the filter 1120 by approximately 60 degrees.

The filter module 1100 according to an embodiment of the present disclosure may improve the sealing performance of the sealing member 130 by utilizing the hydraulic pressure of water flowing into the filter module 1100.

According to an embodiment of the disclosure, a filter module may include a filter case having a case opening and an inlet to allow water to enter the filter case, a filter mountable in the filter case through the case opening, and a sealing member that may be deformable and configured so that, with the filter mounted in the filter case, at least a portion of the sealing member may be outside a perimeter of the case opening, and with the filter mounted in the filter case and the water entering the filter case through the inlet and thereby causing a hydraulic pressure in the filter case, the sealing member may be deformed by the hydraulic pressure so as to seal a gap formed between the filter case and the filter.

With the sealing member deformed by the hydraulic pressure, at least a portion of the sealing member may be in close contact with the filter case.

The filter may include a filter cover that may be configured to cover the case opening when the filter is mounted in the filter case, and the sealing member may be mounted on the filter cover.

The filter module may further include a handle on a side of the filter cover that may be opposite to a side of the filter cover that faces the filter.

The sealing member may include: a sealing body that may be along a perimeter of the filter cover, an extension portion that may extend from the sealing body in an outward direction of the filter cover, and a sealing rib that may extending from the extension portion in a direction that may be different from the outward direction of the filter cover.

With the filter mounted in the filter case, the sealing rib may be outside the perimeter of the case opening.

With the sealing member deformed by the hydraulic pressure, the sealing rib may be in close contact with the filter case.

The sealing body, the extension portion, and the sealing rib may be configured to form a sealing groove, and with the filter mounted in the filter case and the water entering the filter case through the inlet, the sealing groove may be pressed by the water.

The sealing member may further include a sealing protrusion protruding from the sealing rib.

The sealing body may include a deformation groove.

According to an embodiment of the disclosure, a filter apparatus may include a filter housing that may include a housing inlet and a housing outlet, and a filter module that may be configured to filter foreign matter from water entering through the housing inlet, the filter module may include a filter case having a case opening and an inlet that may allow the water entering from the housing inlet to enter the filter case, a filter that may be mountable in the filter case through the case opening, and a sealing member that is configured so that, with the filter mounted in the filter case, at least a portion of the sealing member may be outside a perimeter of the case opening so as to seal a gap formed between the filter case and the filter.

The sealing member may be deformable to allow at least a part thereof to be in close contact with the filter case by hydraulic pressure of water entering the filter case while water flows into the filter case.

The filter may include a filter cover that may be configured to cover the case opening when the filter is mounted in the filter case, and the sealing member may be mounted on the filter cover.

The sealing member may include: a sealing body that may be along a perimeter of the filter cover, an extension portion that may extend from the sealing body in an outward direction of the filter cover, and a sealing rib that may extend from the extension portion in a direction that may be different from the outward direction of the filter cover.

With the filter mounted in the filter case, the sealing rib may be outside the perimeter of the case opening, and with the filter mounted in the filter case and the water entering the filter case through the inlet and thereby causing a hydraulic pressure in the filter case, the sealing rib may be configured to be in close contact with the filter case by the hydraulic pressure.

According to an embodiment of the disclosure, a clothes treating apparatus may include a housing, a tub disposed within the housing, and a drainage device that may discharge water from the tub and may include a filter module configured to filter foreign matter from the discharged water, the filter module may include a filter case including a case opening and an inlet that may allow the discharged water to enter the filter case, a filter mountable in the filter case through the case opening, and a sealing member that may be configured so that, with the filter mounted in the filter case, at least a portion of the sealing member may be outside a perimeter of the case opening so as to seal a gap formed between the filter case and the filter.

The sealing member may be deformable to allow at least a portion thereof to be in close contact with the filter case by hydraulic pressure of water entering the inside of the filter case while water flows into the inside of the filter case.

The filter may include a filter cover provided to cover the case opening when the filter is mounted in the filter case. The sealing member may be mounted on the filter cover.

The sealing member may include a sealing body extending along the perimeter of the filter cover, an extension portion extending from the sealing body in an outward direction of the filter cover, and a sealing rib extending from the extension portion in a direction different from the direction in which the extension portion extends.

The sealing rib may be positioned outside the perimeter of the case opening and may be configured to be in close contact with the filter case by hydraulic pressure of water entering the inside of the filter case while water flows into the inside of the filter case.

According to the spirit of the present disclosure, the filter module, the filter apparatus, and the clothes treating apparatus may have improved sealing performance because the sealing member is deformable under hydraulic pressure.

According to the spirit of the present disclosure, the filter module, the filter apparatus, and the clothes treating apparatus may have an improved mounting structure for the filter since the sealing member is deformable under hydraulic pressure and is configured to be in close contact with the filter case.

The effects to be obtained from the disclosure are not limited to the effects those mentioned above, and other effects not mentioned will be apparent to be a person skilled in the art to which the disclosure belongs from the following description.

While the present disclosure has been particularly described with reference to exemplary embodiments, it should be understood by those of skilled in the art that various changes in form and details may be made without departing from the spirit and scope of the present disclosure.

## Claims

1. A filter module comprising:
a filter case having a case opening and an inlet to allow water to enter the filter case;
a filter mountable in the filter case through the case opening; and
a sealing member that is deformable and is configured so that, with the filter mounted in the filter case, at least a portion of the sealing member is outside a perimeter of the case opening, and with the filter mounted in the filter case and the water entering the filter case through the inlet and thereby causing a hydraulic pressure in the filter case, the sealing member is deformed by the hydraulic pressure so as to seal a gap formed between the filter case and the filter.

2. The filter module of claim 1, wherein, with the sealing member deformed by the hydraulic pressure, at least a portion of the sealing member is in close contact with the filter case.

3. The filter module of claim 1, wherein
the filter includes a filter cover configured to cover the case opening when the filter is mounted in the filter case, and
the sealing member is mounted on the filter cover.

4. The filter module of claim 3, further comprising a handle on a side of the filter cover that is opposite to a side of the filter cover that faces the filter.

5. The filter module of claim 3, wherein the sealing member includes:
a sealing body along a perimeter of the filter cover,
an extension portion extending from the sealing body in an outward direction of the filter cover, and
a sealing rib extending from the extension portion in a direction that is different from the outward direction of the filter cover.

6. The filter module of claim 5, wherein, with the filter mounted in the filter case, the sealing rib is outside the perimeter of the case opening.

7. The filter module of claim 5, wherein, with the sealing member deformed by the hydraulic pressure, the sealing rib is in close contact with the filter case.

8. The filter module of claim 5, wherein
the sealing body, the extension portion, and the sealing rib are configured to form a sealing groove, and
with the filter mounted in the filter case and the water entering the filter case through the inlet, the sealing groove is pressed by the water.

9. The filter module of claim 5, wherein the sealing member further includes a sealing protrusion protruding from the sealing rib.

10. The filter module of claim 5, wherein the sealing body includes a deformation groove.

11. A filter apparatus comprising:
a filter housing including a housing inlet and a housing outlet; and
a filter module configured to filter out foreign matter from water entering through the housing inlet,
the filter module including:
a filter case having a case opening and an inlet to allow the water entering from the housing inlet to enter the filter case,
a filter mountable in the filter case through the case opening, and
a sealing member that is configured so that, with the filter mounted in the filter case, at least a portion of the sealing member is outside a perimeter of the case opening so as to seal a gap formed between the filter case and the filter.

12. The filter apparatus of claim 11, wherein
the filter includes a filter cover configured to cover the case opening when the filter is mounted in the filter case, and
the sealing member is mounted on the filter cover.

13. The filter apparatus of claim 12, wherein the sealing member includes:
a sealing body along a perimeter of the filter cover,
an extension portion extending from the sealing body in an outward direction of the filter cover, and
a sealing rib extending from the extension portion in a direction that is different from the outward direction of the filter cover.

14. The filter apparatus of claim 13, wherein
with the filter mounted in the filter case, the sealing rib is outside the perimeter of the case opening, and
with the filter mounted in the filter case and the water entering the filter case through the inlet and thereby causing a hydraulic pressure in the filter case, the sealing rib is configured to be in close contact with the filter case by the hydraulic pressure.

15. A clothes treating apparatus comprising:
a housing;
a tub disposed within the housing; and
a drainage device to discharge water from the tub and including a filter module configured to filter foreign matter from the discharged water;
wherein the filter module includes:
a filter case including a case opening and an inlet to allow the discharged water to enter the filter case,
a filter mountable in the filter case through the case opening, and
a sealing member that is configured so that, with the filter mounted in the filter case, at least a portion of the sealing member is outside a perimeter of the case opening so as to seal a gap formed between the filter case and the filter.
